Europäisches Patentamt

European Patent Office

Office européen des brevets

(11) Veröffentlichungsnummer: **0 125 343**
**B1**

(12) # EUROPÄISCHE PATENTSCHRIFT

(45) Veröffentlichungstag der Patentschrift:
27.09.89

(51) Int. Cl.⁴: **H 04 Q 1/14**

(21) Anmeldenummer: 83112627.1

(22) Anmeldetag: 15.12.83

(54) Endverzweiger mit lötfreien, schraubfreien und abisolierfreien Anschlusskontakten mit polytropem Luftspalt.

(30) Priorität: 23.02.83 DE 3306263

(43) Veröffentlichungstag der Anmeldung:
21.11.84 Patentblatt 84/47

(45) Bekanntmachung des Hinweises auf die Patenterteilung:
27.09.89 Patentblatt 89/39

(84) Benannte Vertragsstaaten:
AT BE CH FR IT LI LU SE

(56) Entgegenhaltungen:
EP-A- 0 121 223
DE-B- 2 201 504
DE-B- 2 445 381
GB-A- 2 021 332
US-A- 3 609 642

(73) Patentinhaber: KRONE Aktiengesellschaft,
Beeskowdamm 3-11, D-1000 Berlin 37 (DE)

(72) Erfinder: Taybl, Christa, Imbuschweg 39,
D-1000 Berlin 47 (DE)
Erfinder: Gerke, Dieter, Allmendeweg 107,
D-1000 Berlin 27 (DE)
Erfinder: Koch, Fritz Eduard, Schulstrasse 9,
D-5885 Schalksmühle (DE)
Erfinder: Schwenda, Gerhard, Fliederweg 4,
D-8501 Grosshabersdorf (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Endverzweiger zum Anschluß von zu- und abgehenden Fernmeldekabeln an eine im Innern eines mittels eines Deckels verschließbaren Gehäuses angeordneten, mit Schneid-Klemm-Anschlußkontakten versehenen Anschlußleiste.

Ein Endverzweiger der gattungsgemäßen Art ist aus der GB-A-2 021 332 vorbekannt. Bei diesem vorbekannten Endverzweiger ist es nicht möglich, innerhalb des Gehäuses noch ein auf die Anschlußleiste aufsteckbares Überspannungsableitermagazin unterzubringen, ohne daß das Gehäuse in seiner Bauhöhe verändert werden muß.

Der Erfindung liegt von daher die Aufgabe zugrunde, den Endverzweiger der gattungsgemäßen Art dahingehend weiterzubilden, daß dieser bei geringer Bauhöhe ein auf die Anschlußleiste aufsteckbares Überspannungsableitermagazin aufnehmen kann.

Die Lösung dieser Aufgabe ergibt sich aus den kennzeichnenden Merkmalen des Anspruches 1. Durch die erfindungsgemäße Ausbildung der nach oben offenen Kammer zwischen den beiden Reihen von Schneid-Klemm-Anschlußkontakten der Anschlußleiste wird ermöglicht, auch ein Überspannungsableitermagazin in die Anschlußleiste und damit in den Endverzweiger einzusetzen, ohne daß die Bauhöhe des Endverzweigers verändert werden muß.

Es ist zwar bereits aus der DE-P-2 201 504 eine Anschlußleiste mit aufgesteckter Überspannungsschutzvorrichtung vorbekannt. Hierbei handelt es sich jedoch weder um einen Endverzweiger noch um eine Anschlußleiste mit Schneid-Klemm-Anschlußkontakten, so daß auch keine zwischen Schneid-Klemm-Anschlußkontakten zur Aufnahme des Überspannungsableitermagazines vorgesehene Kammer vorhanden ist.

Weitere vorteilhafte Ausgestaltungen der Erfindung ergeben sich aus den Unteransprüchen.

Durch den erfindungsgemäßen Endverzweiger werden folgende Vorteile erreicht:

Die Bauhöhe des Gehäuses ist trotz aufgesteckten Überspannungsableitermagazines klein. Durch die Ausbildung der Kammer ist die Einbaulage des Überspannungsableitermagazines festgelegt. Dieses kann nicht falsch herum eingesteckt werden. Die Schirmkontaktierung des Fernmeldekabels ist selbsttragend, so daß beim Herstellen der Kontaktierung keine Kräfte auftreten, die von den Wandungen des Gehäuses übernommen werden müssen. Die Zugentlastung ist selbsttragend und so gestaltet, daß auch unterschiedliche Kabeldurchmesser sicher gehalten werden können. Der Anschluß des Erddrahtes erfolgt löt- und schraubfrei. Die Abdichtung des vom Innenraum des Gehäuses gebildeten Schaltraumes gegen Spritzwasser erfolgt über Labyrinthe. Die Schrauben zur Mast- bzw. Wandbefestigung des Endverzweigers liegen außerhalb des Schaltraumes und brauchen somit nicht abgedichtet zu werden.

Die Erfindung ist nachfolgend anhand eines in den Zeichnungen dargestellten Ausführungsbeispieles näher erläutert. Es zeigen:

Fig. 1 die Vorderansicht des Endverzweigers ohne Schiebedeckel,

Fig. 2 einen Querschnitt durch den Endverzweiger,

Fig. 3 einen Querschnitt durch die auf den Boden des Endverzweigers aufgerastete Anschlußleiste mit aufgestecktem Überspannungsableitermagazin,

Fig. 4 einen Querschnitt durch eine an der Anschlußleiste angeordnete Klemmeinrichtung für den Erddraht und

Fig. 4a die Draufsicht auf die Klemmeinrichtung nach Fig. 4.

Das Gehäuse 1 des Endverzweigers ist durch einen im geschlossenen und im geöffneten Zustand durch Vorsprünge 2, 3 einrastbaren Schiebedeckel 4 verschließbar. Der Schiebedeckel 4 kann im geöffneten Zustand nach Überwindung der Rastung auch abgenommen werden. Im geschlossenen Zustand bildet der Schiebedeckel 4 im Zusammenwirken mit der oberen Abschlußwand 1a des Gehäuses 1 Labyrinthe 18. Hierdurch wird der einen Schaltraum 20 bildende Innenraum des Gehäuses 1 gegen Spritzwasser abgedichtet.

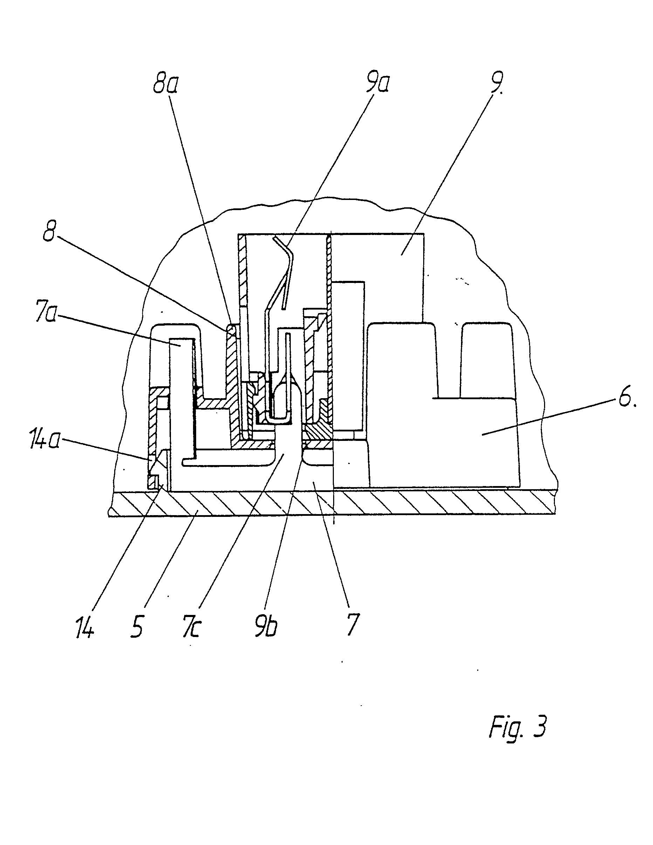

Die zugeführten und abgehenden Fernmeldekabel 21, 22 werden an eine Anschlußleiste 6 herangeführt, die mit Hilfe von Rastnasen 14, die in Öffnungen 14a einklinken, auf die Rückwand 5 des Gehäuses 1 aufrastbar ist (Fig. 3), und an den Kontakten 7a, 7b löt-, schraub- und abisolierfrei angeschlossen.

In die Anschlußleiste 6 ist eine Schiene 7 eingesetzt. Diese weist an den Enden die Kontakte 7a, 7b und in der Mitte eine Kontaktzunge 7c auf, die durch die Öffnung 9b in ein Überspannungsableitermagazin gesteckt ist, wobei eine elektrische Verbindung zu dessen Ableiterkontakt 9a ist. Der Ableiterkontakt 9a dient zur Aufnahme von nicht dargestellten Ableiterpatronen. Die Kontakte 7a, 7b sind so weit auseinander gezogen, daß das Überspannungsableitermagazin 9 in eine zwischen den Kontakten 7a, 7b ausgebildete Kammer 8 der Anschlußleiste 6 eingesetzt werden kann, was eine geringe Bauhöhe bewirkt. Durch Ausbildung dieser nach oben offenen Kammer 8 ist die Lage des Überspannungsableitermagazines 9 festgelegt. Es kann nicht falsch gesteckt werden. Außerdem verhindert eine Kammerwand 8a ein falsches Ansetzen eines nicht dargestellten Anlegewerkzeuges für die Kontaktverbindungen.

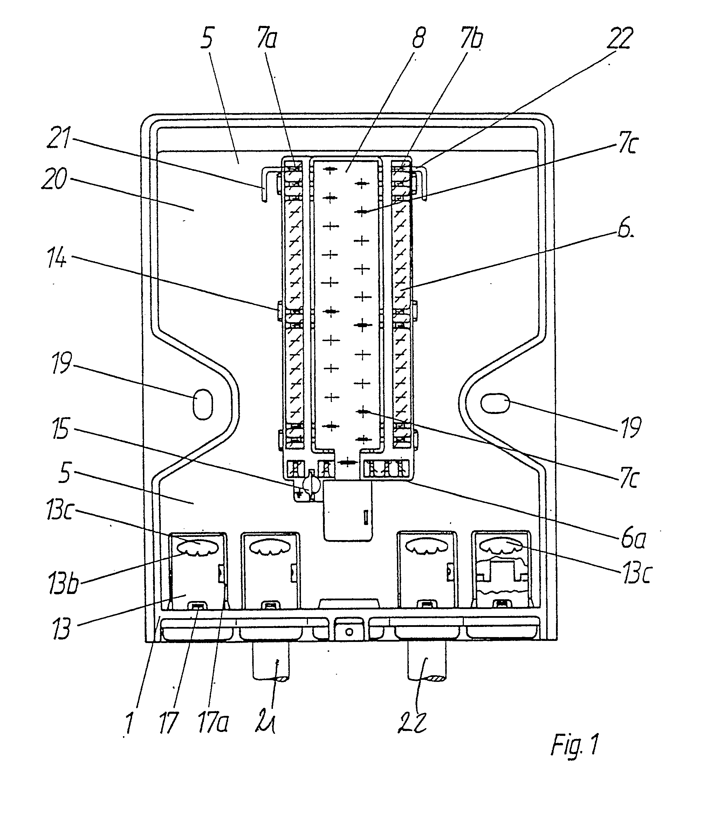

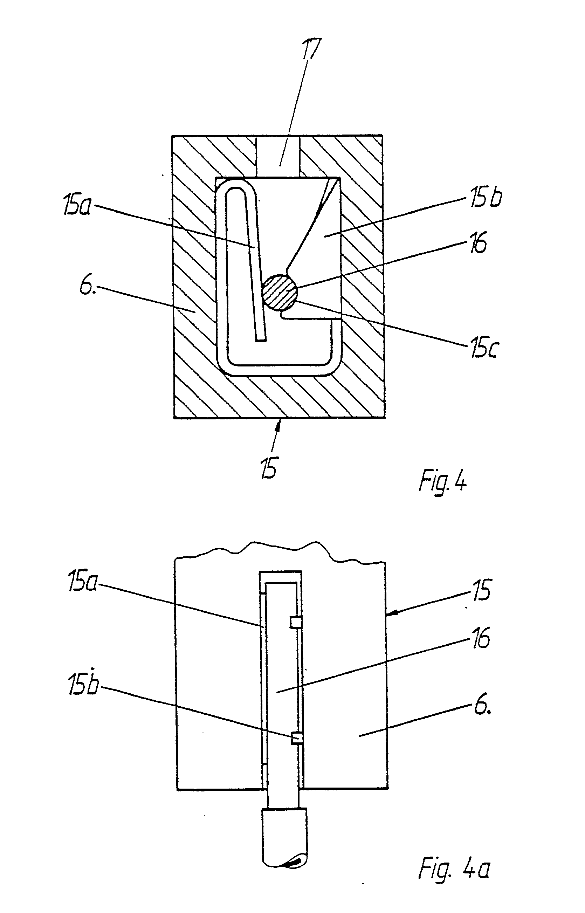

An der Stirnseite 6a der Anschlußleiste 6 ist eine Klemmeinrichtung 15 zum Anschluß eines Erddrahtes 16 angeordnet (Fig. 1). Diese ist in den Figuren 4 und 4a in vergrößerter Darstellung gezeigt. In diese wird ein Erddraht 16 durch eine Öffnung 17 von oben eingelegt und mit Hilfe einer nicht dargestellten Klinge zwischen einer Klemmbügelfeder 15a und einem Aufnahmeteil 15b eingedrückt, das eine Hohlkehle 15c aufweist. Zum Herausnehmen des Erddrahtes 16 wird die Feder 15a durch Drehen der Klinge entriegelt, die durch die Öffnung 17 eingeführt wird. Der Erddraht 16 kann dann in axialer Richtung herausgezogen werden.

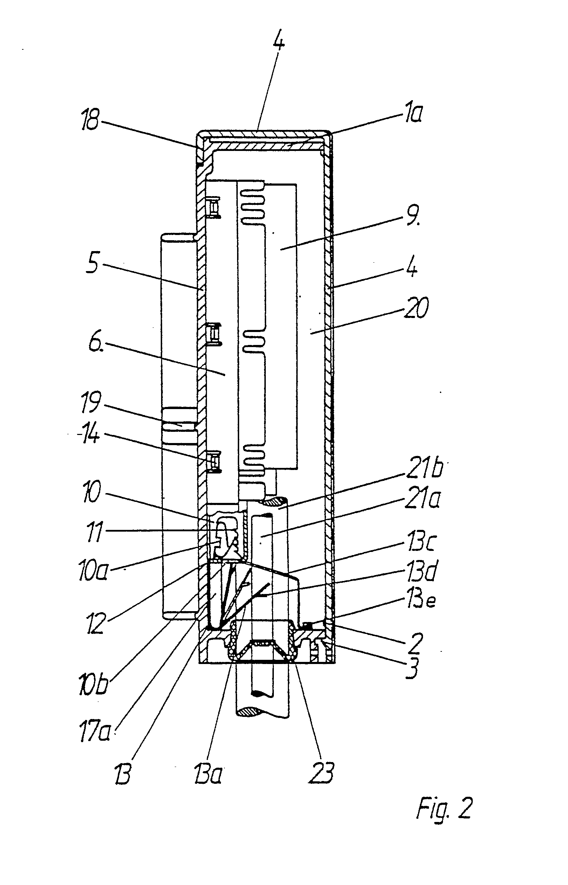

Im unteren Teil des Gehäuses 1 ist eine selbsttragende Schirmkontaktierung vorgesehen (Fig. 2). In diese wird ein Teil eines nicht dargestellten Schichtenmantels eines Kabels, d. h. eines mit Aluminium beschichteten Kunststoffmantels, durch eine Öffnung 10b eingesteckt.

Ein Kontaktierungszähne 11 aufweisender Metallbügel 10 besitzt einen Ansatz 10a, auf den eine Bügelfeder 12 gesteckt ist, die somit in ihrer Lage gehalten ist. Die Bügelfeder 12 klemmt den nicht dargestellten Schichtenmantel an die Kontaktierungszähne 11 und stellt somit den elektrischen Kontakt her. Bei einem Zug auf das Kabel 21a, 21b graben sich die Kontaktierungszähne 11 in den Mantel ein, kontaktieren diesen und verhindern so ein Herausrutschen. Durch die U-förmige Ausführung der Schirmkontaktierung treten beim Anlegen des Schichtenmantelkabels keine Kräfte auf, die von Wandteilen des Gehäuses 1 übernommen werden müßten.

Ferner ist am Gehäuse 1 eine selbsttragende Zugentlastung vorgesehen, die aus einer Klemmfeder 13 besteht, die mit dem einen Ende in einer Rasteinrichtung 13e und mit dem anderen Ende in einer Kammer 17a des Gehäuses 1 gehalten ist. Die Klemmfeder 13 besitzt ebenfalls eine Öffnung 13c mit Klemmzähnen 13b. Am anderen Ende der Klemmfeder 13 ist eine Federzunge 13a abgebogen. Durch diese wird ein dünnes bzw. ein dickes Kabel 21a, 21b gegen die Klemmzähne 13b der Öffnung 13c gedrückt. Bei einer Zugbelastung des Kabels wird die in einem Winkel zur Längsachse des dünnen bzw. des dicken Kabels 21a, 21b stehende Federzunge 13a in das dünne bzw. dicke Kabel 21a, 21b hineingezogen und erhöht somit den Druck auf die Klemmzähne 13b. Bei dünnen Kabeln 21a wirkt der mittlere Teil der Federzunge 13a. Bei dickerem Kabel 21b sind die nochmals abgebogenen Lappen 13d der Federzunge im Eingriff, damit der notwendige Winkel zur Kabelachse auch bei stärkerer Einfederung der Zunge erhalten bleibt. Zum Entriegeln besitzt die Federzunge 13a eine nicht dargestellte Bohrung. Durch Eindrücken des Entriegelungsteiles eines Werkzeuges können die Zunge nach hinten gedrückt und das dünne bzw. dicke Kabel 21a, 21b herausgezogen werden.

Die Figuren 1 und 2 zeigen weiterhin Mast- oder Wandbefestigungsbohrungen 19, die ausserhalb des Schaltraumes 20 angeordnet sind, so dass durch diese hindurchgeführte, nicht dargestellte Schrauben nicht abgedichtet werden müssen.

Durch die Einführung eines Dichtungsstopfens 23 in eine Öffnung in der unteren Abschlußwand des Gehäuses 1 wird das eingeführte Kabel 21a, 21b abgedichtet. Gleichzeitig wird ein Entfernen der Klemmfeder 13 verhindert.

## Patentansprüche

1. Endverzweiger zum Anschluß von zu- und abgehenden Fernmeldekabeln an eine im Innern eines mittels eines Deckels verschließbaren Gehäuses angeordneten, mit Schneid-Klemm-Anschlußkontakten versehenen Anschlußleiste, dadurch gekennzeichnet, daß in der Anschlußleiste (6) zwischen den Schneid-Klemm-Kontakten (7a, 7b) eine nach oben offene Kammer (8) zur Aufnahme eines Überspannungsableitermagazines (9) ausgebildet ist und daß die Schneid-Klemm-Anschlußkontakte (7a, 7b) an den Enden von in die Anschlußleiste (6) eingesetzten Schienen (7) angeordnet sind, in deren Mittelbereichen in die Kammer (8) ragende Kontaktzungen (7c) ausgebildet sind, auf die das Überspannungsableitermagazin (9) mit Öffnungen (9b) zur elektrischen Verbindung mit den Ableiterkontakten (9a) aufgesteckt ist.

2. Endverzweiger nach Anspruch 1, dadurch gekennzeichnet, daß die Anschlußleiste (6) mit Hilfe von in Öffnungen (14a) einklinkenden Rastnasen (14) auf die Rückwand (5) des Gehäuses (1) aufrastbar ist.

3. Endverzweiger nach Anspruch 1 oder 2, dadurch gekennzeichnet, daß an der Kammer (8) eine Kammerwand (8a) zur Verhinderung des falschen Ansetzens eines Anlegewerkzeuges angeordnet ist.

4. Endverzweiger nach einem der Ansprüche 1 bis 3, dadurch gekennzeichnet, daß zum löt- und schraubfreien Anschluß eines Erddrahtes (16) an der Stirnseite (6a) der Anschlußleiste (6) eine Klemmeinrichtung (15) angeordnet ist, die aus einer Klemmbügelfeder (15a), einem, eine Hohlkehle (15c) aufweisenden Aufnahmeteil (15b) und einer zum Einlegen des Erddrahtes (16) dienenden Öffnung (17) besteht.

5. Endverzweiger nach einem der Ansprüche 1 bis 3, dadurch gekennzeichnet, daß am Gehäuse (1) eine selbsttragende Schirmkontaktierung angeordnet ist, die als U-förmiger Metallbügel (10) mit Kontaktierungszähnen (11) und einer in den Metallbügel (10) einklemmbaren Bügelfeder (12) ausgebildet ist, und daß der Metallbügel (10) einen in die Bügelfeder (12) hineinragenden Ansatz (10a) aufweist.

6. Endverzweiger nach einem der Ansprüche 1 bis 3, dadurch gekennzeichnet, daß am Gehäuse (1) eine selbsttragende Zugentlastung angeordnet ist, die aus einer in das Gehäuse (1) einrastbaren, mit einer Federzunge (13a) ausgebildeten Klemmfeder (13) ausgebildet ist, die eine Öffnung (13c) mit Klemmzähnen (13b) aufweist.

7. Endverzweiger nach Anspruch 6, dadurch gekennzeichnet, daß die Klemmfeder (13) mit einem Ende in einer Rasteinrichtung (13e) und mit dem anderen Ende in einer Kammer (17a) des Gehäuses (1) gehalten ist.

8. Endverzweiger nach Anspruch 7, dadurch gekennzeichnet, daß die Federzunge (13a) aufgebogene Lappen (13d) aufweist.

9. Endverzweiger nach einem der Ansprüche 1 bis 3, dadurch gekennzeichnet, daß der das Gehäuse (1) abschließende Schiebedeckel (4) im Zusammenwirken mit der oberen Abschlußwand (1a) des Gehäuses (1) Labyrinthe (18) zur Abdichtung ausbildet.

10. Endverzweiger nach einem der Ansprüche 1 bis 3, dadurch gekennzeichnet, daß das Gehäuse (1) außerhalb des den Schaltraum (20) bildenden Innenraumes Mast- oder Wandbefestigungsbohrungen (19) aufweist.

## Claims

1. A terminal unit for connecting incoming and outgoing communication cables to a connector bank disposed in the interior of a housing to be closed by a cover and provided with insulation displacement contacts, characterized by that in the connector bank (6) between the insulation displacement contacts (7a, 7b), a chamber (8) open towards top is formed for receiving an overvoltage-suppressor unit (9), and that the insulation displacement contacts (7a, 7b) are disposed at the ends of rails (7) inserted into the connector bank (6), in the central sections of said rails contact tongues (7c) being provided and extending into the chamber (8), on which contact tongues the overvoltage-suppressor unit with apertures (9b) for the electrical connection to the suppressor contacts (9a) being plugged.

2. A terminal unit according to claim 1, characterized by that the connector bank (6) can be locked on the rear wall (5) of the housing (1) by means of latching portions (14) engaging into apertures (14a).

3. A terminal unit according to claim 1 or 2, characterized by that at the chamber (8), a chamber wall (8a) is provided for preventing the faulty application of a joining tool.

4. A terminal unit according to one of claims 1 to 3, characterized by that for solderless and non-screwed connection of an earthing wire (16) at the front side (6a) of the connector bank (6), a clamping device (15) is disposed, said device comprising a clamping-bracket spring (15a), a receiving portion (15b) exhibiting a channel (15b), and an aperture (17) serving for insertion of the earthing wire (16).

5. A terminal unit according to one of claims 1 to 3, characterized by that at the housing (1), a self-supporting shield contact is arranged, which is formed as U-shaped metal bracket (10) with contacting teeth (11) and with a bracket spring (12) clampable into the metal bracket (10), and that the metal bracket (10) comprises a projection (10a) extending into the bracket spring (12).

6. A terminal unit according to one of claims 1 to 3, characterized by that at the housing (1) a self-supporting strain relief is arranged, which comprises a clamping spring (13) to be locked in the housing (1) and provided with a spring tongue (13a), said clamping spring comprising an aperture (13c) with clamping teeth (13b).

7. A terminal unit according to claim 6, characterized by that the clamping spring (13) is held at one end in a latching device (13e) and at the other end in a chamber (17a) of the housing (1).

8. A terminal unit according to claim 7, characterized by that the spring tongue (13a) has bent-up lugs (13d).

9. A terminal unit according to one of claims 1 to 3, characterized by that the slide cover (4) closing the housing (1) forms together with the upper end wall (1a) of the housing (1) labyrinths (18) for sealing.

10. A terminal unit according to one of claims 1 to 3, characterized by that the housing (1) comprises outside the interior space forming the switching compartment (20) mast or wall fastening bores (19).

## Revendications

1. Bloc de branchement pour le raccordement de câbles de télécommunication de départ et d'entrée à une réglette de raccordement disposée à l'intérieur d'un boîtier se fermant au moyen d'un couvercle et pourvu de contacts de coupe et de serrage, caractérisé en ce que dans la réglette de raccordement (6) entre les contacts de coupe et de serrage (7a, 7b), une chambre (8) ouverte en haut pour le logement d'une unité d'éclateurs déchargeurs (9) est formée, et en ce que les contacts de coupe et de serrage (7a, 7b) sont disposés aux extrémités de rails (7) insérés dans la réglette de raccordement (6), dans les parties centrales de ceux-ci des lames de contact (7c) s'étendant dans la chambre (8) étant formées, aux lesquelles l'unité d'éclateurs déchargeurs (9) avec des ouvertures (9b) pour la connexion électrique aux contacts conducteurs (9a) est enfichée.

2. Bloc de branchement selon la revendication 1, caractérisé en ce que la réglette de raccordement (6) est encliquetable à la paroi arrière (5) du boîtier (1) au moyen de cames encliquetables (14) s'enclenchant dans des ouvertures (14a).

3. Bloc de branchement selon la revendication 1 ou 2, caractérisé en ce qu'à la chambre (8), une paroi (8a) de ladite chambre est disposée pour l'empêchement d'une mise au point fausse d'un outil de raccordement.

4. Bloc de branchement selon une des revendications 1 à 3, caractérisé en ce que pour le raccordement sans soudure et sans vis d'un fil de terre (16) au front (6a) de la réglette de raccordement (6), un dispositif de serrage (15) est prévu, ce dispositif comportant un ressort pour un étrier de serrage (15a), une partie de logement (15b) présentant un congé (15c) et une ouverture (17) servant à la mise en place du fil de terre (16).

5. Bloc de branchement selon une des revendications 1 à 3, caractérisé en ce qu'au boîtier (1), un dispositif de contact à l'écran portant de soi-même est prévu, ce dispositif étant réalisé sous la forme d'une pièce métallique en U (10) avec des dents de contact (11) et un ressort recourbé (12) à serrer dans la pièce métallique recourbée (10), et en ce que la pièce métallique recourbée comporte une saillie (10a) s'étendant dans le ressort recourbé (12).

6. Bloc de branchement selon une des revendications 1 à 3, caractérisé en ce qu'au boîtier (1), un dispositif de décharge de traction portant de soi-même est prévu, ce dispositif étant formé d'un ressort de serrage (13) encliquetable dans le boîtier (1) et prévu d'une lame de ressort (13a), et présentant une ouverture (13c) avec des dents de serrage (13b).

7. Bloc de branchement selon la revendication 6, caractérisé en ce que le ressort de serrage (13) est supporté à l'une extrémité dans un dispositif d'encliquetage (13e) et à l'autre extrémité dans une chambre (17a) du boîtier (1).

8. Bloc de branchement selon la revendication 7, caractérisé en ce que la lame de ressort (13a) est prévue de languettes (13d) recourbées.

9. Bloc de branchement selon une des revendications 1 à 3, caractérisé en ce que le couvercle à coulisse (4) fermant le boîtier (1) forme des labyrinthes (18), avec le concours de la paroi supérieure (1a) du boîtier (1), pour étanchéification.

10. Bloc de branchement selon une des revendications 1 à 3, caractérisé en ce que le boîtier (1) comporte à l'extérieur de l'intérieur formant le compartiment de distribution des forures de fixation (19) à un mât ou à un poteau.

Fig. 1

Fig. 2

*Fig. 3*

Fig. 4

Fig. 4a